# EUROPÄISCHE PATENTANMELDUNG

(11) **EP 3 296 169 A1**
(43) Veröffentlichungstag der Anmeldung: **21.03.2018**
(21) Anmeldenummer: 17179347.4
(22) Anmeldetag: 03.07.2017
(51) Int. Cl.: B60T 7/08, A47L 11/40, B60T 17/18, B60R 25/08, B60T 1/00

(54) **MANUELLE BREMSENTRIEGELUNG FÜR EIN FAHRBARES REINIGUNGSGERÄT**

(30) Priorität: 05.09.2016 DE 202016104869 U
(71) Anmelder: G. Staehle GmbH u. Co. KG, 70372 Stuttgart (DE)
(72) Erfinder: Staehle, Joerg Peter, 70193 Stuttgart (DE)
(74) Vertreter: Mammel und Maser

(57) **Zusammenfassung**

Die Erfindung betrifft ein fahrbares Reinigungsgerät (10), insbesondere Boden-Reinigungsmaschine, mit einem Fahrgestell (15), einem Antrieb (33), einer Batterie (16) und einer selbstverriegelnden Bremse (34), die auf den Antrieb (33) oder eine Antriebsachse (32) wirkt, wobei ein Schlüssel (21) zur Inbetriebnahme eines elektrischen Fahrbetriebes des Reinigungsgerätes (10) und ein Bremsentriegelungselement (23) zur manuellen Entriegelung der Bremse (34) des Reinigungsgerätes (10) miteinander als eine handhabbare Einheit (26) verbunden sind, so dass mittels des Schlüssels (21) im Zündschloss (20) beim Einschalten des Fahrbetriebes die Bremse (34) entriegelbar ist und das Bremsentriegelungselement (23) getrennt zur Bremse (34) angeordnet ist oder in einem manuellen Betrieb die Bremse (34) mit dem Bremsentriegelungselement (23) entriegelbar ist und der Schlüssel (21) aus dem Zündschloss (20) abgezogen ist.

## Beschreibung

Die Erfindung betrifft ein fahrbares Reinigungsgerät, insbesondere Boden-Reinigungsmaschine, mit einem Fahrgestell, einem Antrieb, einer Batterie und einer selbstverriegelnden Bremse, die auf den Antrieb oder eine Antriebsachse wirkt.

Solche Reinigungsgeräte werden durch einen Elektromotor angetrieben und umfassen eine entriegelbare Bremse. Zum Fahren des Reinigungsgerätes ist es erforderlich, dass das Reinigungsgerät mit einem Zündschlüssel gestartet wird. Dadurch wird die Bremse elektromagnetisch entriegelt und der Fahrbetrieb angesteuert. Nach Beendigung der Reinigung wird das Reinigungsgerät abgeschaltet und die Bremse automatisch verriegelt.

Es treten Situationen ein, in denen die Batterie des Reinigungsgeräts leer ist, in denen keine Batterie eingebaut ist oder in denen beispielsweise das Reinigungsgerät ohne elektrischen Antrieb auf einen Anhänger für einen Transport geschoben werden muss.

Um dies zu ermöglichen, kann die Bremse des Antriebs manuell entriegelt werden.

Allerdings kann der Fall eintreten, dass die Bedienperson nach dem Abschluss der manuellen Handhabung des Reinigungsgeräts vergisst, die manuelle Entriegelung der Bremse wieder rückgängig zu machen.

Der Erfindung liegt die Aufgabe zugrunde, ein fahrbares Reinigungs-gerät, insbesondere eine Boden-Reinigungsmaschine bereitzustellen, bei dem die Bediensicherheit erhöht ist.

Zur Lösung dieser Aufgabe umfasst das Reinigungs-gerät einen Schlüssel zur Inbetriebnahme eines elektrischen Fahrbetriebes des Reinigungsgerätes und ein Bremsentriegelungselement zur manuellen Entriegelung einer Bremse des Reinigungsgerätes, wobei der Schlüssel und das Bremsentriegelungselement miteinander als eine handhabbare Einheit verbunden sind, so dass mittels des Schlüssels in einem Zündschloss beim Einschalten des Fahrbetriebes die Bremse entriegelbar ist und das Bremsentriegelungselement getrennt zur Bremse angeordnet ist. In einem manuellen Betrieb des Reinigungsgeräts ist die Bremse mit dem Bremsentriegelungselement entriegelbar und der Schlüssel aus dem Zündschloss abgezogen. Sobald die Bedienperson das Reinigungsgerät wieder motorgetrieben fortbewegen möchte, ist er gezwungen die manuelle Entriegelung wieder aufzuheben, da er den Schlüssel benötigt und somit zuvor das Bremsentriegelungselement von der Bremse abzieht. Gleiches gilt, wenn der manuelle Betrieb beendet wird, da die Bedienperson für den Schlüssel verantwortlich ist und diesen von dem Reinigungsgerät entfernt. Zum Starten des Fahrbetriebes muss sich der Schlüssel in dem Zündschloss befinden. Da der Schlüssel mit dem Bremsentriegelungselement eine Einheit bildet und eine räumliche Trennung zwischen Zündschloss und Bremse existiert, ist es nicht möglich, dass die Bremse mit dem Bremsentriegelungselement entriegelt ist und der Antrieb gestartet werden kann. Die Betriebssicherheit wird somit erhöht, da sich das Reinigungsgerät entweder nur im manuellen Betrieb oder nur im Fahrbetrieb befinden kann.

Bevorzugt sind der Schlüssel und das Bremsentriegelungselement mit einem lösbaren Verbindungselement, insbesondere einem Ring, verbunden. Der Ring kann aus Federstahl oder auch aus jedem anderen geeignetem Material bestehen. Der Schlüssel und das Bremsentriegelungselement sind derart miteinander verbunden, dass sich bei normalem Gebrauch der Schlüssel nicht von dem Bremsentriegelungselement löst.

In einer alternativen Ausführungsform sind der Schlüssel und das Bremsentriegelungselement einteilig. Dadurch kann die Herstellung der Einheit ohne kostspieliges Zusammensetzen der Komponenten erfolgen.

Alternativ können der Schlüssel und das Bremsentriegelungselement auch unlösbar miteinander verbunden sein. Dennoch können diese zueinander beweglich sein.

Des Weiteren ist bevorzugt, dass der Schlüssel mit dem Bremsentriegelungselement zueinander beweglich oder flexibel verbunden ist. Dadurch kann eine kompakte Bauform geschaffen werden ohne dass das Verriegelungselement sperrig am Schlüssel hervorsteht.

Ein Griff des Schlüssels kann bevorzugt in einer Ausführungsform als Bremsentriegelungselement oder als Teil des Bremsentriegelungselements ausgebildet sein. Dadurch ist ebenfalls ein einfacher Aufbau gegeben.

Vorzugsweise umfasst die Bremse ein Verriegelungselement, das in einer Ruheposition den Antrieb verriegelt. Dadurch wird verhindert, dass das Reinigungsgerät ungewollt seine Position verändert. Als Ruheposition wird der Zustand verstanden, der nach Ausschalten der Zündung eintritt. Im Fahrbetrieb hingegen erfolgt bevorzugt eine elektrisch angesteuerte Entriegelung der Bremse. Zum manuellen Fahrbetrieb erfolgt das Lösen der Bremse bevorzugt manuell.

Bevorzugt ist das Verriegelungselement als elektromagnetisches Verriegelungselement ausgebildet. Dies stellt eine einfache und kleinbauende Ausführungsform dar. Bevorzugt wird dabei der Antrieb mechanisch verriegelt.

Bevorzugt verriegelt mittels einer Feder das Verriegelungselement in der Ruheposition den Antrieb. Durch die Feder ist sichergestellt, dass das Verriegelungselement den Antrieb selbsthaltend verriegelt, sobald die Bremse nicht mehr bestromt wird. Dadurch wird unabhängig von einer Stromzufuhr das Reinigungsgerät gebremst.

Das Verriegelungselement, welches mit dem Antrieb in einem Antriebsgehäuse vorgesehen ist, ist bevorzugt durch eine manuelle Bremsverriegelung in eine Entriegelungsposition überführbar, wobei die Bremsverriegelung außerhalb des Antriebsgehäuses angeordnet ist. In Situationen, in denen die Batterie leer ist, in denen möglicherweise keine Batterie eingebaut ist oder in denen beispielsweise das Reinigungsgerät ohne elektrischen Antrieb auf einen Anhänger geschoben werden muss, ist die Bremsverriegelung dadurch von außen zugänglich, ohne dass zeitaufwändig ein Gehäuse geöffnet werden muss. Die Bedienperson kann somit leicht die Bremsverriegelung betätigen, um die Bremse zu entriegeln und das Reinigungsgerät manuell fortbewegen.

Vorteilhafterweise ist in der Entriegelungsposition der Bremse das Bremsentriegelungselement zwischen dem Antriebsgehäuse und der Bremsverriegelung positioniert. Um die Bremse in die Entriegelungsposition zu überführen, wird das Bremsentriegelungselement zwischen das Antriebsgehäuse und die Bremsverriegelung geschoben. Dadurch entriegelt das Verriegelungselement den Antrieb. Gleichzeitig wird die auf das Verriegelungselement wirkende Feder gespannt.

Die gespannte Feder ermöglicht zusätzlich, dass in der Entriegelungsposition der Bremse das Bremsentriegelungselement zwischen dem Antriebsgehäuse und der Bremsverriegelung vorzugsweise geklemmt gehalten ist. Dadurch kann der Schlüssel mit dem Bremsentriegelungselement nicht herausfallen und die Bremse ungewollt verriegeln.

Eine bevorzugte Ausgestaltung der Erfindung sieht vor, dass das Verriegelungselement der Bremse im Fahrbetrieb elektromagnetisch entriegelt ist. Sobald die Zündung mit dem Schlüssel abgeschaltet wird, fällt das elektromagnetische Feld zusammen und die Feder lässt das Verriegelungselement in die Verriegelungsposition zurückführen. Dadurch wird große Betriebssicherheit erreicht und ein ungewolltes Verschieben des Reinigungsgeräts verhindert.

Eine weitere bevorzugte Ausgestaltung der Erfindung sieht vor, dass ein Ende des Bremsentriegelungselements, welches der Verbindung zum Schlüssel gegenüber liegt, keilförmig ausgebildet ist. Dadurch kann das Bremsentriegelungselement ohne große Kraftaufwendung und ohne sich zu verhaken zwischen das Antriebsgehäuse und die Bremsverriegelung geschoben werden, selbst wenn diese kaum voneinander beabstandet sind.

Bevorzugt ist das Bremsentriegelungselement aus Kunststoff hergestellt, es kann aber auch aus anderen ausreichend harten Materialien hergestellt sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht eines Reinigungsgeräts,
Figur 2 eine schematische, perspektivische Ansicht eines Seitenelements mit Bedienkonsole,
Figur 3 eine schematische Ansicht einer Achse mit Antrieb, Bremse und Bremsverriegelung,
Figur 4 eine Ausführungsform einer handhabbaren Einheit eines Schlüssels und eines Bremsverriegelungselements,
Figur 5 eine schematische, perspektivische Ansicht der Achse in Figur 3 mit der Bremse im entriegelten Zustand,
Figur 6 eine seitliche schematische Darstellung einer alternativen Ausführungsform der manuellen Einheit zu Figur 3,
Figur 7 eine Draufsicht auf die manuelle Einheit gemäß Figur 6, und
Figur 8 eine Draufsicht auf eine alternative Ausführungsform der manuellen Einheit zu Figur 6.

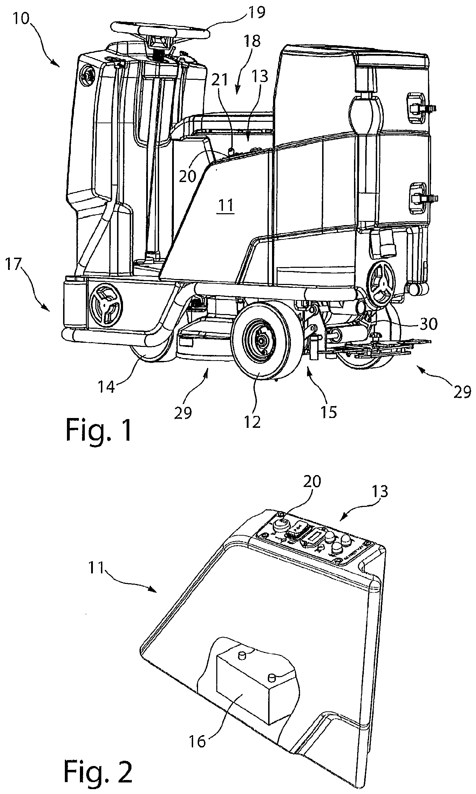

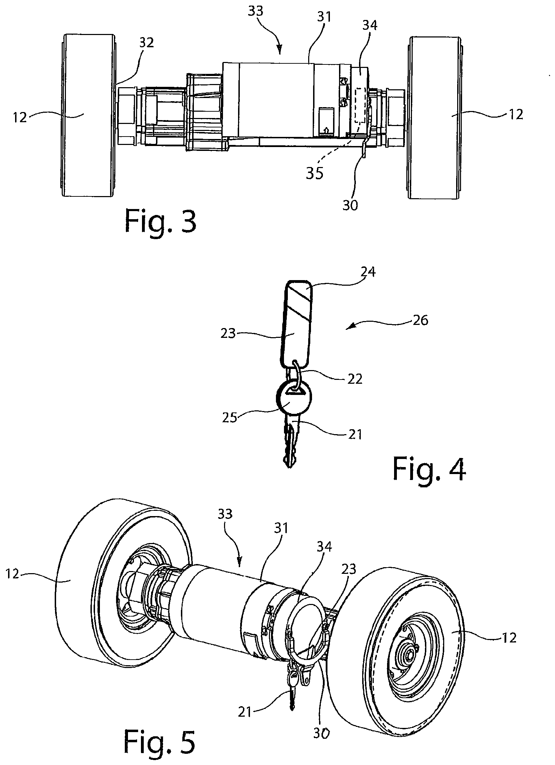

In Figur 1 ist eine schematische Ansicht eines Reinigungsgeräts 10 dargestellt. Hierbei handelt es sich beispielsweise um eine Aufsitz-Boden-Reinigungsmaschine, welche angetriebene Räder 12, insbesondere ein Räderpaar, sowie ein lenkbares Rad 14 an einem Gehäuse 17 umfasst. Die Räder 12 werden mit einem Antrieb 33 (Figur 3) angetrieben, der innerhalb eines Gehäuses 17 vorgesehen ist. An einer Unterseite des Reinigungsgeräts 10 befindet sich eine Reinigungsvorrichtung 29 durch welche eine Nass- und/oder Trockenreinigung eines Bodens möglich ist. Das Gehäuse 17 umfasst des Weiteren einen Sitz 18 für eine Bedienperson sowie ein Lenkrad 19 zum Ansteuern des lenkbaren Rades 14. Ein seitlich zum Sitz 18 liegendes Seitenelement 11 umfasst eine Bedienkonsole 13, in der sich ein Zündschloss 20 und weitere Steuerelemente befindet. Um den elektrischen Betrieb des Reinigungsgeräts 10 aufzunehmen, muss das Reinigungsgeräts 10 mit einem in das Zündschloss 20 eingesteckten Schlüssel 21 gestartet werden. Mit dem Schlüssel 21 kann das Reinigungsgerät 10 an und ausgeschaltet werden.

Das in Figur 2 dargestellte Seitenelement 11 umfasst eine Bedienkonsole 13, in dem das Zündschloss 20 angebracht ist. Um das Reinigungsgerät 10 in den Fahrbetrieb zu versetzen, wird der Schlüssel 21 in das Zündschloss 20 gesteckt und gedreht. In dem Seitenelement 11 befindet sich eine Batterie 16, die den Antrieb 33 und die Steuerelemente mit Strom versorgt.

Figur 3 zeigt eine Seitenansicht einer Antriebsachse 32 mit den angetriebenen Rädern 12, eines an der Antriebsachse 32 befestigten Antriebsgehäuses 31, in dem der Antrieb 33, insbesondere ein elektrischer Motor, angeordnet ist. Das Antriebsgehäuse 31 umfasst eine Bremse 34 und ein Verriegelungselement 35, das durch ein Rückstellelement, insbesondere Federelement in einer Verriegelungsposition anordenbar ist. Dadurch wird die Bremse 34 verriegelt. Bei der Bremse 34 handelt es sich insbesondere um eine elektromagnetische Bremse, die durch Bestromung entriegelt wird. Im Fahrbetrieb wird das Verriegelungselement 31 elektromagnetisch in eine Entriegelungsposition überführt und die Bremse 34 entriegelt. Dabei wird die am Verriegelungselement 35 angreifende Feder gespannt. Wird der Fahrbetrieb unterbrochen oder beendet, fällt das elektromagnetische Feld zusammen und die Feder drückt das Verriegelungselement 35 in die Verriegelungsposition und die Bremse 34 verriegelt den Antrieb 33.

Außenliegend am Antriebsgehäuse 31 befindet sich eine Bremsverriegelung 30, die als Bügel ausgebildet sein kann. In Figur 3 liegt die Bremsverriegelung am Antriebsgehäuse 31 an. In einer solchen Ausgangsposition ist die Bremse 34 verriegelt. Diese Bremsverriegelung 30 greift an dem Verriegelungselement 35 an bzw. kann durch die Bremsverriegelung 30 das Verriegelungselement 35 in eine Entriegelungsposition übergeführt werden.

In Figur 4 ist eine erste Ausführungsform einer handhabbaren Einheit 26 bestehend aus einem Schlüssel 21 und einem Bremsentriegelungselements 23 dargestellt. An einem Ende 24 ist das Bremsentriegelungselements 23 keilförmig verjüngt. An dem gegenüberliegenden Ende ist das Bremsentriegelungselements 23 mittels eines Verbindungselements 22, das als Ring ausgebildet sein kann, beweglich mit dem Schlüssel 21, bevorzugt mit einem Griff 25 des Schlüssels 21, verbunden. Das Bremsentriegelungselement 23 ist derart mit dem Schlüssel 21 verbunden, dass es sich bei normaler Verwendung nicht von dem Schlüssel 21 lösen kann.

Figur 5 zeigt eine perspektivische Ansicht der Antriebsachse 32 aus Figur 3. Um die Bremse 34 zu entriegeln, wird das Bremsentriegelungselement 23, das mit dem Schlüssel 21 verbunden ist, mit dem freien Ende 24 zwischen die Bremsverriegelung 30 und das Antriebsgehäuse 31 geschoben. Dadurch wird die Bremsverriegelung 30 von dem Antriebsgehäuse 31 beabstandet. Das Verriegelungselement 35 ist dadurch zwangsweise in die Entriegelungsposition übergeführt und die Bremse 34 entriegelt. Die Bremse 34 wirkt weder auf den Antrieb 33 noch auf die Antriebsachse 32. In diesem Zustand kann das Reinigungsgerät 10 manuell bewegt, beispielsweise geschoben, werden.

Wird der manuelle Betrieb beendet oder möchte die Bedienperson wieder in den Fahrbetrieb wechseln, entfernt die Bedienperson das Bremsentriegelungselement 23, um den damit verbundenen Schlüssel 21 in das Zündschloss 20 zu stecken. Dies führt dazu, dass die Bremsverriegelung 30 zurückfedert und das Verriegelungselement 35 die Bremse 34 wieder verriegelt.

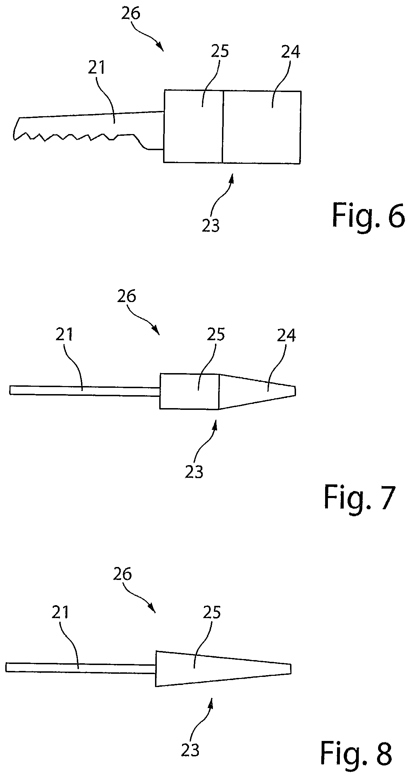

Die Figur 6 zeigt eine Seitenansicht und die Figur 7 eine Draufsicht von einer weiteren Ausführungsform der handhabbaren Einheit 26. Der Schlüssel 21 und das Bremsentriegelungselement 23 sind einteilig ausgebildet, wobei der Griff 25 des Schlüssels 21 zum Bremsentriegelungselement 23 umgebildet ist. Das Ende 24 ist auch hier bevorzugt keilförmig verjüngt.

Die Figur 8 zeigt eine weitere Ausführungsform der handhabbaren Einheit 26. Bei dieser Ausführungsform ist beispielsweise der gesamte Griff 25 keilförmig ausgebildet.

Der zum Bremsentriegelungselement 23 umgebildete Griff 25 kann beispielsweise auf den Schlüssel 21 aufgesteckt sein oder bei der Herstellung direkt an den Schlüssel 21 angespritzt werden.

## Patentansprüche

1. Fahrbares Reinigungsgerät (10), insbesondere Boden-Reinigungsmaschine, mit einem Fahrgestell (15), einem Antrieb (33), einer Batterie (16) und einer selbstverriegelnden Bremse (34), die auf den Antrieb (33) oder eine Antriebsachse (32) wirkt, **dadurch gekennzeichnet, dass** ein Schlüssel (21) zur Inbetriebnahme eines elektrischen Fahrbetriebes des Reinigungsgerätes (10) und ein Bremsentriegelungselement (23) zur manuellen Entriegelung der Bremse (34) des Reinigungsgerätes (10) miteinander als eine handhabbare Einheit (26) verbunden sind, so dass mittels des Schlüssels (21) im Zündschloss (20) beim Einschalten des Fahrbetriebes die Bremse (34) entriegelbar ist und das Bremsentriegelungselement (23) getrennt zur Bremse (34) angeordnet ist oder in einem manuellen Betrieb die Bremse (34) mit dem Bremsentriegelungselement (23) entriegelbar ist und der Schlüssel (21) aus dem Zündschloss (20) abgezogen ist.

2. Fahrbares Reinigungsgerät (10) nach Anspruch 1, **dadurch gekennzeichnet, dass** der Schlüssel (21) und das Bremsentriegelungselement (23) über ein lösbares Verbindungselement (22), insbesondere einen Ring, verbunden sind.

3. Fahrbares Reinigungsgerät (10) nach Anspruch 1, **dadurch gekennzeichnet, dass** der Schlüssel (21) und das Bremsentriegelungselement (23) unlösbar miteinander verbunden sind oder einteilig sind.

4. Fahrbares Reinigungsgerät (10) nach einem der vorhergehenden Ansprüche, **dadurch gekennzeichnet, dass** der Schlüssel (21) mit dem Bremsentriegelungselement (23) zueinander beweglich oder flexibel verbunden ist.

5. Fahrbares Reinigungsgerät (10) nach Anspruch 3, **dadurch gekennzeichnet, dass** ein Griff (25) des Schlüssels (21) als Bremsentriegelungselement (23) oder als Teil des Bremsentriegelungselements (23) ausgebildet ist.

6. Fahrbares Reinigungsgerät (10) nach einem der vorhergehenden Ansprüche, **dadurch gekennzeichnet, dass** die Bremse (34) ein Verriegelungselement (35) umfasst, das in einer Ruheposition den Antrieb (33) verriegelt und im Fahrbetrieb elektrisch entriegelbar und im manuellen Betrieb manuell entriegelbar ist.

7. Fahrbares Reinigungsgerät (10) nach Anspruch 6, **dadurch gekennzeichnet, dass** das Verriegelungselement (35) als elektromagnetisches Verriegelungselement ausgebildet ist, welches den Antrieb (33) vorzugsweise mechanisch verriegelt.

8. Fahrbares Reinigungsgerät (10) nach einem der Ansprüche 6 oder 7, **dadurch gekennzeichnet, dass** mittels einer Feder das Verriegelungselement (35) in der Ruheposition gehalten ist.

9. Fahrbares Reinigungsgerät (10) nach einem der Ansprüche 6 bis 8, **dadurch gekennzeichnet, dass** das Verriegelungselement (35), welches mit dem Antrieb (33) in einem Antriebsgehäuse (31) vorgesehen ist, durch eine auf das Verriegelungselement (35) einwirkende manuelle Bremsverriegelung (30) in eine Entriegelungsposition überführbar ist und vorzugsweise die Bremsverriegelung (30) außerhalb des Antriebsgehäuses (31) angeordnet ist.

10. Fahrbares Reinigungsgerät (10) nach Anspruch 9, **dadurch gekennzeichnet, dass** in der Entriegelungsposition der Bremsverriegelung (30) das Bremsentriegelungselement (23) zwischen dem Antriebsgehäuse (31) und der Bremsverriegelung (30) positioniert ist.

11. Fahrbares Reinigungsgerät (10) nach einem der Ansprüche 9 oder 10, **dadurch gekennzeichnet, dass** in der Entriegelungsposition der Bremsverriegelung (30) das Bremsentriegelungselement (23) zwischen dem Antriebsgehäuse (31) und der Bremsverriegelung (30) geklemmt gehalten ist.

12. Fahrbares Reinigungsgerät (10) nach einem der vorhergehenden Ansprüche, **dadurch gekennzeichnet, dass** das Bremsentriegelungselement (23) an einem Ende (24) keilförmig ausgebildet ist.

13. Fahrbares Reinigungsgerät (10) nach einem der vorhergehenden Ansprüche, **dadurch gekennzeichnet, dass** das Bremsentriegelungselement (23) aus Kunststoff, Stahl, Aluminium oder einem Verbundmaterial besteht.
